# EUROPEAN PATENT APPLICATION

(11) **EP 2 869 217 A1**
(43) Date of publication of application: **06.05.2015**
(21) Application number: 13835464.2
(22) Date of filing: 10.09.2013
(51) Int. Cl.: G06F 17/30

(54) **METHOD AND DEVICE FOR PRESENTING SOCIAL NETWORK SEARCH RESULTS AND STORAGE MEDIUM**

(30) Priority: 10.09.2012 CN 201210332244
(71) Applicant: Tencent Technology Shenzhen Company Limited, Shenzhen, Guangdong 518044 (CN)
(72) Inventor: PAN, Shushen, Shenzhen Guangdong 518044 (CN); WU, Yi, Shenzhen Guangdong 518044 (CN); ZHANG, Jing, Shenzhen Guangdong 518044 (CN); WANG, Cong, Shenzhen Guangdong 518044 (CN); SHI, Yifeng, Shenzhen Guangdong 518044 (CN); LIN, Liao, Shenzhen Guangdong 518044 (CN); HUANG, Xingjun, Shenzhen Guangdong 518044 (CN); LIU, Jun, Shenzhen Guangdong 518044 (CN); MA, Ming, Shenzhen Guangdong 518044 (CN)
(74) Representative: Manitz, Finsterwald & Partner GbR
(86) International application number: PCT/CN2013/083220
(87) International publication number: WO 2014/036975

(57) **Abstract**

A method for presenting social network search results, includes: obtaining a keyword, and obtaining search results according to the keyword; obtaining a social attribute type; obtaining information corresponding to the social attribute type in the search results according to the social attribute type, and statistically analyzing the information according to the social attribute type to obtain an analysis result; presenting the analysis result according to the social attribute type. In addition, a device for presenting social network search results and a storage medium are also provided. The method and the device for presenting social network search results and the storage medium can make operations of a user more convenient.

## Description

The present application claims foreign priority to Chinese Patent Application No. 201210332244.0, filed with the State Intellectual Property Office of China on Sept. 10, 2012 and entitled "METHOD AND DEVICE FOR PRESENTING SOCIAL NETWORK SEARCH RESULTS AND STORAGE MEDIUM ", which are incorporated herein by reference in their entireties.

### FIELD OF THE DISCLOSURE

The present disclosure relates to network technologies, and more particularly relates to a method and a device for presenting social network search results and a storage medium.

### BACKGROUND OF THE DISCLOSURE

Social networking services (SNS) are service networks based on social relationships. The social relationships include relatives, regions, classmates, colleagues, schoolfellows, peers, contemporaries, etc. Users can be related in a virtual community of the SNS through real social relationships, and can implement various kinds of social activities through the internet.

The conventional SNS provides a user searching function, in which an inputted keyword can be obtained and users can be found according to the keyword, the found users are then presented in a form of lists. The keyword can be a name, a region, an industry, and an age bracket. For example, if a user inputs "Zhang Ting" in a search bar of Kaixin. Net, all of the user data with a name containing "Zhang Ting" will be presented in the form of lists in a subsequent expanded page, which is convenient for a user to add friends.

However, in the conventional technologies, a method for presenting social network search results usually only presents searched user data in the form of lists or tiling. In a subsequent process of adding friends, the user cannot quickly locate expected user data according to expected social relationships. The user usually needs to view every social relationship (i.e. age, graduate school, and work place) of the user data presented in the list one by one, and the user needs to switch pages for many times, which is inconvenient for the user to operate.

### SUMMARY OF THE DISCLOSURE

Accordingly, it is necessary to provide a method for presenting social network search results that can make operations of a user more convenient.

A method for presenting social network search results includes:
obtaining a keyword, and obtaining search results according to the keyword;
obtaining a social attribute type;
obtaining information corresponding to the social attribute type in the search results according to the social attribute type, and statistically analyzing the information according to the social attribute type to obtain an analysis result; and
presenting the analysis result according to the social attribute type.

It is also necessary to provide a device for presenting social network search results that can make operations of a user more convenient.

A device for presenting social network search results, includes:
a search result obtaining module configured to obtain a keyword, and obtain search results according to the keyword;
a social attribute type obtaining module configured to obtain a social attribute type;
a statistical analyzing module configured to obtain information corresponding to the social attribute type in the search results according to the social attribute type, statistically analyze the information according to the social attribute type to obtain an analysis result; and
a presenting module configured to present the analysis result according to the social attribute type.

Furthermore, it is also necessary to provide a storage medium that can make operations of a user more convenient.

A storage medium for storing computer executable instructions, the storage medium storing one or more programs to be executed by one or more processors for executing a method of a method for presenting social network search results, the method includes:
obtaining a keyword, and obtaining search results according to the keyword;
obtaining a social attribute type;
obtaining information corresponding to the social attribute type in the search results according to the social attribute type, and statistically analyzing the information according to the social attribute type to obtain an analysis result; and
presenting the analysis result according to the social attribute type.

In the method and device for presenting social network search results and the storage medium, search results are statistically analyzed according to the social attribute and presented to the user, thus the user can conveniently find out a distribution of the social attribute in the search result. When adding friends latterly, the user can choose a friend who is highly related to himself, thus the frequency of switching pages and viewing user data can be reduced, which is convenient to the user.

### BRIEF DESCRIPTION OF THE DRAWINGS

FIG. 1 is a flow chart of a method for presenting social network search results in accordance with an embodiment;
FIG. 2 is a presenting interface diagram of a search result in accordance with an embodiment;
FIG. 3 is a presenting interface diagram of a search result in accordance with an embodiment;
FIG. 4 is a presenting interface diagram of a search result in accordance with an embodiment;
FIG. 5 is a presenting interface diagram of a search result in accordance with an embodiment;
FIG. 6 is a block diagram of a device for presenting social network search results in accordance with an embodiment; and
FIG. 7 is a block diagram of a device for presenting social network search results in accordance with another embodiment.

### DETAILED DESCRIPTION OF THE EMBODIMENTS

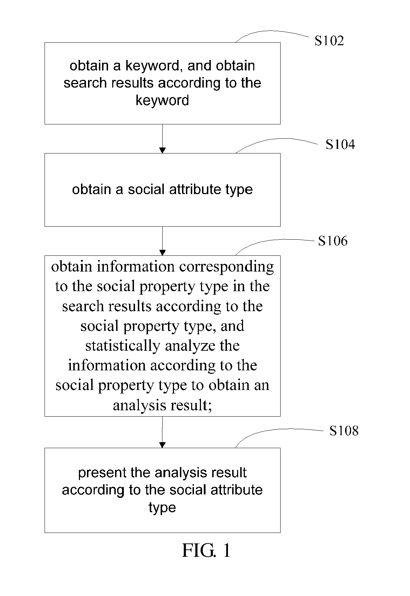

Referring to FIG. 1, in an embodiment, a method for presenting social network search results includes the following steps:

S102, a keyword is obtained, and search results are obtained according to the keyword.

The search results obtained according to the keyword are a set of user data corresponding to the keyword.

In an embodiment, the search results corresponding to the keyword can be obtained through social networking query interfaces. Social networking sites usually provide interfaces for querying user data, for example, heavyweight web service interface and lightweight presentational state transfer (REST) interface. The search results corresponding to the keyword can be obtained from a data base used to store user data of the social networking site by sending the keyword to the corresponding social networking query interfaces.

Furthermore, a keyword may also be obtained though a search engine; the keyword is determined whether it is a keyword corresponding to the social attribute type or not, if yes, the user data corresponding to the keyword is obtained through a social networking query interface.

The step of determining whether the keyword is a keyword corresponding to the social attribute type or not can be illustrated in detail: whether the keyword belongs to a preset social attribute data base is determined, if yes, the keyword corresponds to the social attribute type; if no, the keyword does not correspond to the social attribute type. The social attribute data base can be established according to a training corpus presenting social attribute types, such as surname, common name, age bracket, industry, region and so on.

For instance, if a user inputs a keyword "Zhang Ting" into a search engine (Soso, Baidu or Google, and so on), since the keyword includes the surname "Zhang" and the common name "Ting" which belong to the social attribute data base, thus, the keyword "Zhang Ting" is a keyword corresponding to the social attribute type; if the user inputs a keyword "Beijing, IT, post 80s" into a search engine (Soso, Baidu or Google, and so on), "Beijing", "IT", and "post 80s" are obtained after splitting, which belong to the social attribute data base, thus, the keyword "Beijing, IT, post 80s" is a keyword corresponding to the social attribute type.

S104, the social attribute type is obtained.

In an embodiment, the social attribute type includes at least one selected from the group consisting of name, region, industry, age, age bracket, birth date, gender, constellation, graduate school, graduate class, photo, network virtual community, occupation, and company.

In an embodiment, the social attribute type may be preseted, and multiple enumeration types can be preseted for the social attribute type. Such as enumeration types "male" and "female" can be preseted for the social attribute type "gender", enumeration types "post 60s", "post 70s","post 80s", "post 90s" and so on can be preseted for the social attribute type "age bracket".

S106, information corresponding to the social attribute type in the search results according to the social attribute type is obtained, and the information according to the social attribute type is statically analyzed to obtain an analysis result.

The analysis result of statistically analyzing is social distributed information of the search results, i.e. number distributed information of user data which contains the same or similar number of user data. For example, if the social attribute type includes age brackets, the analysis result will include the distributed information of user data on enumeration types like "post 60s", "post 70s", "post 80s" "post 90s" and so on in the search results; if the social attribute type includes names, the analysis result will include the number distributed information of user data containing the same name in the search results.

In an embodiment, the enumeration types preseted for the social attribute types are corresponding to the keyword and number information. Information of the social attribute type corresponding to each search result is obtained according to the social attribute type, the information according to the social attribute type is statistically analyzed to obtain the analysis result, and this can be illustrated in detail.

The user data in the search results is traversed, and the user data is compared with each enumeration type, if the user data includes information corresponding to the enumeration type matching the keyword, the number of the enumeration type is accumulated. After traversing, analysis results can be generated according to the number information of the enumeration types.

For example, the social attribute type "region" can be pre-divided into several enumeration types according to provinces and municipalities, matching keywords include "Beijing", "Guangdong Province", "Hubei Province" and so on. The user data is traversed in the search results, if the user data includes region information like "Guangdong Province", "Guangdong" and "Canton", 1 is added to the number information of the region group corresponding to "Guangdong Province"; if the user data includes region information like "Hubei Province", "Hubei" and "E", 1 is added to the number information of the region group corresponding to "Hubei Province". After the traversing, supposing the number of the region group corresponding to "Beijing" is 12, the number of the region group corresponding to "Guangdong Province" is 38, and the number of the region group corresponding to "Hubei Province" is 6, analysis results can therefore be generated according to the number information.

For another example, the social attribute type "age bracket" can be pre-divided into several enumeration types including "post 60s", "post 70s", "post 80s", "post 90s" and "post 00s". The user data is traversed in the search results, if the user data includes birth dates during 1980 to 1989, 1 is added to the number information of the region group corresponding to "post 80s". If the user data includes birth dates during 2000 to 2009, 1 is added to the number information of the region group corresponding to "post 00s".

S108, the analysis result is presented according to the social attribute type.

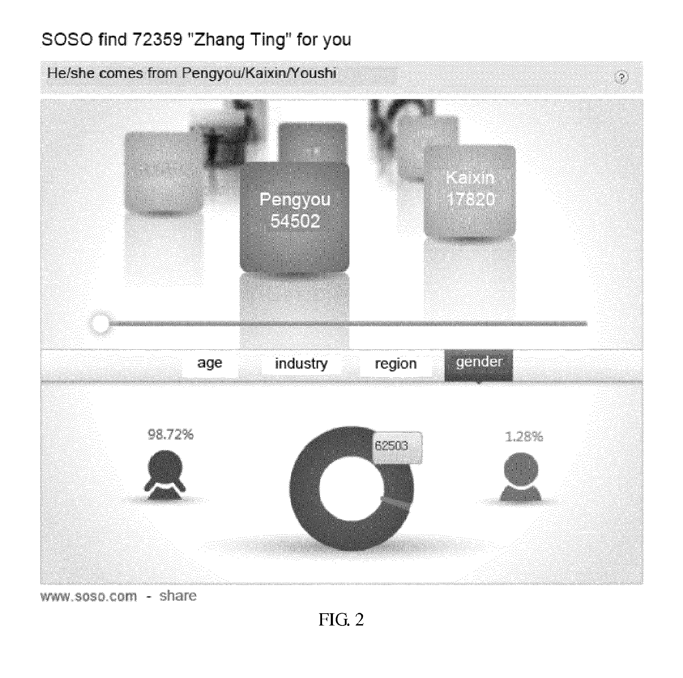

In an embodiment, diagrams corresponding to the social attribute types can be generated according to the analysis results. For example, the analysis results include social distribution information of region type, age bracket type, industry type, and gender type, referring to FIG. 2, these analysis results can be presented by region distribution diagram, age bracket distribution diagram, industry distribution diagram, and gender distribution diagram.

In an embodiment, there may be several social networking query interfaces. User data corresponding to the keyword can be obtained through the social networking query interfaces according to the keyword.

For instance, referring to FIG. 2, FIG. 2 is a presenting interface diagram generated after a user inputs a keyword "Zhang Ting" in a search engine. The inputted keyword "Zhang Ting" is obtained through the search engine, and in the search results, there are total 72359 users corresponding to the keyword "Zhang Ting", in which 54502 users come from "Pengyou. Net" virtual community, 17820 users come from "Kaixin. Net" virtual community and 17 users come from "Youshi. Net" virtual community. FIG. 2 shows the user number corresponding to each virtual community by dynamic image, and the user can click a corresponding dynamic image to enlarge and view the user number of the keyword in a corresponding virtual community.

Referring to FIG. 2, it further shows the gender distribution information in the search results to the user. In which the proportion of male users and female users corresponding to the keyword "Zhang Ting" are 98.73% and 1.28%, respectively. The user can move the cursor to the dynamic images to view the exact number (62503) of female users and the exact number (813) of the male users.

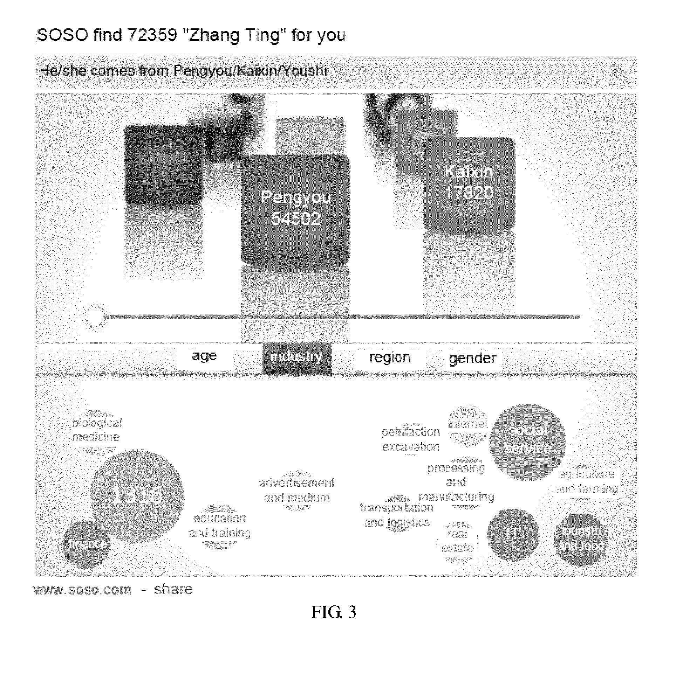

In an embodiment, referring to FIG. 3, the social attribute types may also include industry, 14 enumeration types are preseted for "industry" type, including finance, biological medicine, education and training, advertisement and medium, transportation and logistics, processing and manufacturing, information technology (IT), tourism and food, real estate, farming, internet, oil producing, and social service (corresponding to the user number 1316 in the diagram). Each enumeration type can be shown by a dynamic image. When the cursor is detected in the area of the image, the user number of the corresponding enumeration type is presented. For example, when the cursor is detected in the area of the image corresponding to "social service", user number of 1316 in social service industry with the name "Zhang Ting" is shown.

In an embodiment, after the analysis result is presented according to the social attribute type, the method further includes the following steps: an inputted social attribute keyword is obtained; the user data corresponding to the inputted social attribute keyword is obtained in the analysis result; and the user data corresponding to the social attribute keyword is presented.

The social attribute keyword can be corresponding to the enumeration types of the social attribute type. For example, if the user chooses to click an icon corresponding to "finance" enumeration type, the inputted social attribute keyword is "finance". The user data of "finance" enumeration type can be screened and presented in the search results.

In an embodiment, the particular steps of obtaining the user data corresponding to the inputted social attribute keyword in the analysis results includes: searching the user data corresponding to the social attribute keyword in the search results, i.e. to search in the results. In another embodiment, the particular steps of obtaining the user data corresponding to the inputted social attribute keyword in the analysis results includes: combining the obtained keyword and the inputted social attribute keyword, and taking the sum of them, and then searching and obtaining the user data according to the combined keyword. Since the method of searching in the results and the method of searching according to the combined keyword can both obtain the user data accord with the keyword and the social attribute keyword at the same time, such as the screened user data is the same. However, the method of searching according to the combined keyword can save a storage space for storing the search results, thus it has a higher efficiency.

In an embodiment, prior to the analysis result is presented according to the social attribute type, the method further includes the following step: user authorization information is obtained; authorized user data is obtained corresponding to the user authorization information; the user data corresponding to the authorized user data on social attribute type is screened in the search results; and the user data corresponding to the authorized user data is presented.

User authorization information means information generated after the user logs in the social networking services to confirm user identities. Requests with user authorization information (including requests from other internet websites outside the social networking services) can visit the user data corresponding to the user authorization information on the social networking services, including user data, application information, and so on. Authorized user data means user data of the user whom has been logged in and got the user authorization information.

In an embodiment, the step of screening the user data corresponding to the user authorization data on social attribute types from the search results particularly includes: obtaining the attribute type of the user authorization data on social attribute types; and screening the user data corresponding to the attribute type of the user authorization data on social attribute types from the search results.

For example, supposing a male user engaged in finance industry in Guangdong Province has logged in and inputted "Zhang Ting" to search, the region attribute type of the obtained user authorization information is "Guangdong Province", the industry attribute type is "finance" , and the gender attribute type is "male", thus the user data with "Guangdong Province" (the same city) on region attribute type, and/or "finance" (the same industry) on industry attribute type, and/or "female" (opposite sex) on gender attribute type will be screened from the user date with name "Zhang Ting" in the search results. The screening method can be the keyword querying method mentioned above, and will not be described again.

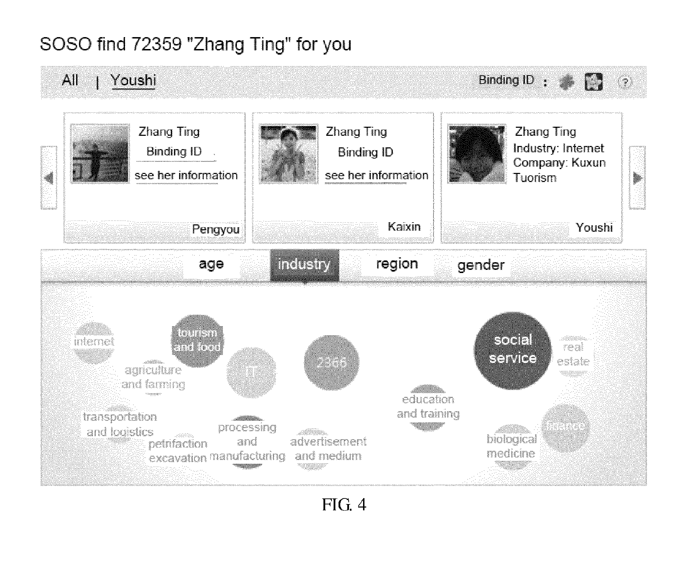

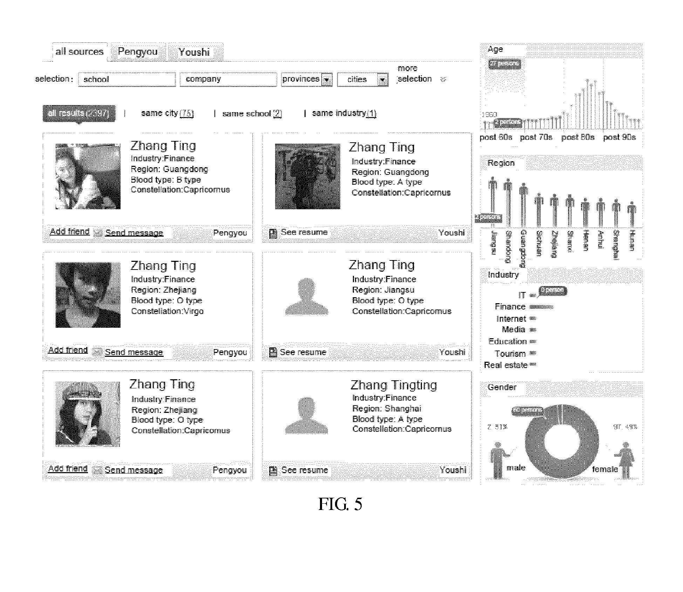

Referring to FIG. 4, the user can input a social attribute keyword by clicking an icon on a dynamic image, the icon on the dynamic image corresponds to multiple enumeration types under industry attribute type, including finance, services and so on. If the user clicks the icon corresponding to the finance enumeration type, referring to FIG. 5, user data with name of "Zhang Ting" and industry of "finance" can be presented in an expanded secondary page.

Referring to FIG. 5, in the expanded secondary page, authorized user data can be obtained, together with corresponding information of user region (with the same region attribute type), schoolfellow (with the same graduate school attribute type), or colleague (with the same industry attribute type), and presented by multiple tags.

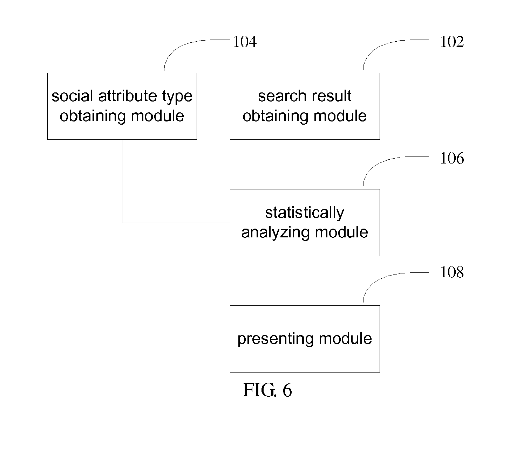

In an embodiment, referring to FIG. 6, a device for presenting social network search results includes a search result obtaining module 102, a social attribute type obtaining module 104, a statistically analyzing module 106, and a presenting module 108, in which:

The search result obtaining module 102 is configured to obtain a keyword, and obtain search results according to the keyword.

The search results obtained according to the keyword are a set of user data corresponding to the keyword.

In an embodiment, the search results corresponding to the keyword can be obtained through social networking query interfaces. Social networking sites usually provide interfaces for querying user data, for example, heavyweight web service interface and lightweight presentational state transfer (REST) interface. The search results corresponding to the keyword can be obtained from a data base for storing user data of the social networking site by sending the keyword to the corresponding social networking query interfaces.

Furthermore, keywords may also be obtained though a search engine; whether the keyword is a corresponding keyword of the social attribute type or not is determined, if yes, user data corresponding to the keyword is obtained through a social networking query interface.

The search result obtaining module 102 can also be configured to determine whether the keyword belongs to a preseted social attribute data base or not, if yes, the keyword is corresponding to the social attribute type; if no, the keyword is not corresponding to the social attribute type. The social attribute data base can be established according to a training corpus presenting social attribute types of surname, common name, age bracket, industry, region and so on.

For instance, if a user inputs a keyword "Zhang Ting" into a search engine (Soso, Baidu or Google, and so on), since the keyword includes the surname "Zhang" and the common name "Ting" which belong to the social attribute data base, thus, the keyword "Zhang Ting" is a keyword corresponding to the social attribute type; if the user inputs a keyword "Beijing, IT, post 80s" into a search engine (Soso, Baidu or Google, and so on), "Beijing", "IT", and "post 80s" are obtained after splitting, which belong to the social attribute data base, thus ,the keyword "Beijing, IT, post 80s" is a keyword corresponding to the social attribute type.

The social attribute type obtaining module 104 is configured to obtain the social attribute type.

In an embodiment, social attribute type includes at least one selected from the group consisting of name, region, industry, age, age bracket, birth date, gender, constellation, graduate school, graduate class, photo, network virtual community, occupation, and company.

In an embodiment, the social attribute type may be presented, and multiple enumeration types can be presented for the social attribute type. Such as preset enumeration types "male" and "female" for the social attribute type "gender", preset enumeration types "post 60s", "post 70s","post 80s" and "post 90s" , and so on for the social attribute type "age bracket".

The statistically analyzing module 106 is configured to obtain information of the social attribute type corresponding to each search result according to the social attribute type, statistically analyze the information according to the social attribute type, and obtain an analysis result.

The analysis result of statistically analyzing is social distributed information of the search results, i.e. number distributed information of user data which contains the same or similar number of user data. For example, if the social attribute type includes age brackets, the analysis result will include the distributed information of user data on enumeration types like "post 60s", "post 70s", "post 80s" "post 90s" and so on in the search results; if the social attribute type includes names, the analysis result will include the number distributed information of user data containing the same name in the search results.

In an embodiment, the enumeration types preseted for the social attribute types are corresponding to the keyword and number information. Information of the social attribute type corresponding to each search result is obtained according to the social attribute type, the information is statistically analyzed according to the social attribute type in the analysis result can be illustrated in detail.

For example, the social attribute type "region" can be pre-divided into several enumeration types according to provinces and municipalities, matching keywords include "Beijing", "Guangdong Province", "Hubei Province" and so on. The user data is traversed in the search results, if the user data includes region information like "Guangdong Province", "Guangdong" and "Canton", 1 is added to the number information of the region group corresponding to "Guangdong Province"; if the user data includes region information like "Hubei Province", "Hubei" and "E", 1 is added to the number information of the region group corresponding to "Hubei Province". After the traversing, supposing the number of the region group corresponding to "Beijing" is 12, the number of the region group corresponding to "Guangdong Province" is 38, and the number of the region group corresponding to "Hubei Province" is 6, analysis results can therefore be generated according to the number information.

For another example, the social attribute type "age bracket" can be pre-divided into several enumeration types including "post 60s", "post 70s", "post 80s", "post 90s" and "post 00s". The user data is traversed in the search results, if the user data includes birth dates during 1980 to 1989, 1 is added to the number information of the region group corresponding to "post 80s". If the user data includes birth dates during 2000 to 2009, 1 is added to the number information of the region group corresponding to "post 00s".

The presenting module 108 is configured to present the analysis result according to the social attribute type.

In an embodiment, the presenting module 108 can be configured to generate diagrams corresponding to the social attribute types according to the analysis results. For example, the analysis results include social distribution information of region type, age bracket type, industry type, and gender type, referring to FIG. 2, the presenting module 108 can be configured to present the analysis results by region distribution diagram, age bracket distribution diagram, industry distribution diagram, and gender distribution diagram.

In an embodiment, there may be several social networking query interfaces. User data corresponding to the keyword can be obtained through the social networking query interfaces according to the keyword.

For instance, referring to FIG. 2, FIG. 2 is a presenting interface diagram obtained after a user inputs a keyword "Zhang Ting" into a search engine. Obtain the inputted keyword "Zhang Ting" into the search engine, and in the search results, there are total 72359 users corresponding to the keyword "Zhang Ting". In which 54502 users come from "pengyou net" virtual community, 17820 users come from "kaixin net" virtual community, and 17 users come from "youshi net" virtual community. FIG. 2 shows the user number corresponding to each virtual community by dynamic image, and the user can click a corresponding dynamic image to enlarge and view the user number of the keyword in the corresponding virtual community.

Referring to FIG. 2, it further shows the gender distribution information in the search results to the user. In which the proportion of male users and female users corresponding to the keyword "Zhang Ting" are 98.73% and 1.28%, respectively. The user can move the cursor to the dynamic image to view the exact number (62503) of female users and the exact number (813) of the male users.

In the embodiment, referring to FIG. 3, the social attribute types may also include industry, 14 enumeration types can be preseted for "industry" type, including finance, biological medicine, education and training, advertisement and medium, transportation and logistics, processing and manufacturing, information technology (IT), tourism and food, real estate, agriculture and farming, internet, petrifaction excavation, and social service (corresponding to the user number 1316 in the diagram). Each enumeration type can be shown by dynamic image. When the cursor is detected in the range of the image, present the user number of the corresponding enumeration type. For example, when the cursor is detected in the range of the diagram corresponding to "social service", user number of 1316 in social service industry with the name "Zhang Ting" is shown.

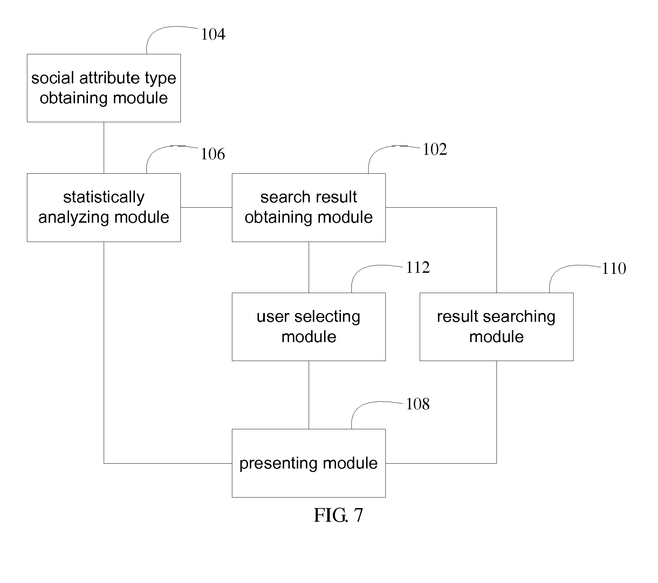

In an embodiment, referring to FIG. 7, the device for presenting social network search results further includes a result searching module 110 configured to obtain the inputted social attribute keyword, and obtain the user data corresponding to the inputted social attribute keyword in the analysis result. The presenting module 108 is further configured to present the user data corresponding to the social attribute keyword.

The social attribute keyword can be corresponding to the enumeration type of the social attribute type. For example, if the user chooses to click an icon corresponding to "finance" enumeration type, the inputted social attribute keyword is "finance". The user data of "finance" enumeration type can be screened and presented from the search results.

In an embodiment, the result searching module 110 can be configured to search the user data corresponding to the social attribute keyword in the search results, i.e. to search in the results. In another embodiment, the result searching module 110 may also be configured to combine the obtained keyword and the inputted social attribute keyword, and take the sum of them, and then search and obtain the user data according to the combined keyword. Since the method of searching in the results and the method of searching according to the combined keyword can both obtain the user data accord with the keyword and the social attribute keyword at the same time, such as the screened user data is the same. However, the method of searching according to the combined keyword can save a storage space for storing the search results, thus it has a higher efficiency.

In an embodiment, referring to FIG. 7, the device for presenting social network search results further includes a user screening module 112 configured to obtain user authorization information, obtain user authorization information corresponding to the user authorization information, and screen user data corresponding to the authorized user data on social attribute type in the search results. The presenting module 108 is further configured to present the user data corresponding to the authorized user data.

User authorization information means information generated after the user log in the social networking services to verify user identity. Requests with user authorization information (including requests from other internet websites outside the social networking services), can visit the user data corresponding to the user authorization information on the social networking services, including user data, application information, and so on. Authorized user data means user data of the user whom has been logged in and got the user authorization information.

In an embodiment, user screening module 112 may also be configured to obtain the attribute type of the user authorization data on social attribute types; and screen the user data corresponding to the attribute type of the user authorization data on social attribute types in the search results.

For example, suppose a male user engaged in finance industry in Guangdong Province has logged in and inputted "Zhang Ting" to search, the region attribute type of the obtained user authorization information is "Guangdong Province", the industry attribute type is "finance" , and the gender attribute type is "male", thus the user data with "Guangdong Province" (the same city) on region attribute type, and/or "finance" (the same industry) on industry attribute type, and/or "female" (opposite sex) on gender attribute type will be screened from the user date with name "Zhang Ting" in the search results. The screening method can be the keyword querying method mentioned above, and will not be described again.

Referring to FIG. 4, the user can input a social attribute keyword by clicking an icon on a dynamic image, the icon on the dynamic image corresponds to multiple enumeration types under industry attribute type, including finance, services and so on. If the user clicks the icon corresponding to the finance enumeration type, referring to FIG. 5, user data with name of "Zhang Ting" and industry of "finance" can be presented in an expanded secondary page.

Referring to FIG. 5, in the expanded secondary page, authorized user data can be obtained, together with corresponding information of user region (with the same region attribute type), schoolfellow (with the same graduate school attribute type), or colleague (with the same industry attribute type), and presented by multiple tags.

It can be understood by those skilled in the art that the whole or parts of the process of the method in the above embodiment can be realized by computer program instructing related hardware, the computer program is stored in a computer readable storage medium, when the program is executed, it can include process of methods in the embodiment described above. The storage medium can be diskette, compact disc, Read-Only Memory (ROM) or Random Access Memory (RAM), and so on.

In the method and device for presenting social network search results and the storage medium, search results are counted and analyzed according to the social attribute and presented to the user, thus the user can conveniently find out a distribution of the social attribute in the search result. Lately, when add friends, the user can choose a friend who is highly related to himself, thus the frequency of switching page and viewing user data can be reduced, which is convenient to the user.

The embodiments described above only show a few implement manners of the present disclosure, the description is specific and detailed, but it cannot be interpreted as a limitation of the range of the present disclosure. What should be pointed out is that it is apparent to those skilled in the art that a variety of modifications and changes may be made without departing from the scope of the present disclosure. Thus, the range of the present disclosure should be defined by the appended claims.

## Claims

1. A method for presenting social network search results, comprising:
obtaining a keyword, and obtaining search results according to the keyword;
obtaining a social attribute type;
obtaining information corresponding to the social attribute type in the search results according to the social attribute type, and statistically analyzing the information according to the social attribute type to obtain an analysis result; and
presenting the analysis result according to the social attribute type.

2. The method for presenting social network search results according to claim 1, wherein the step of obtaining the keyword, and obtaining search results according to the keyword comprises:
obtaining the keyword through a search engine; and
determining whether the keyword is a keyword corresponding to the social attribute type or not, if yes, obtaining user data corresponding to the keyword through a social networking query interface.

3. The method for presenting social network search results according to claim 1, wherein after the step of presenting the analysis result according to the social attribute type, the method further comprises:
obtaining an inputted social attribute keyword;
obtaining the user data corresponding to the inputted social attribute keyword in the analysis result; and
presenting the user data matching the social attribute keyword.

4. The method for presenting social network search results according to claim 1, wherein the step of obtaining search results according to the keyword comprises:
obtaining user data corresponding to the keyword through multiple social networking query interfaces according to the keyword.

5. The method for presenting social network search results according to any of claims 1-4, wherein the social attribute type comprises at least one selected from the group consisting of name, region, industry, age, age bracket, birth date, gender, constellation, graduate school, graduate class, photo, network virtual community, occupation, and company.

6. The method for presenting social network search results according to claim 5, wherein prior to the step of presenting the analysis result according to the social attribute type, the method further comprises:
obtaining user authorization information;
obtaining authorized user data corresponding to the user authorization information;
screening the user data corresponding to the authorized user data on social attribute type in the search results; and
presenting the user data matching the authorized user data.

7. A device for presenting social network search results, comprising:
a search result obtaining module configured to obtain a keyword, and obtain search results according to the keyword;
a social attribute type obtaining module configured to obtain a social attribute type;
a statistically analyzing module configured to obtain information corresponding to the social attribute type in the search results according to the social attribute type, and
statistically analyze the information according to the social attribute type to obtain an analysis result; and
a presenting module configured to present the analysis result according to the social attribute type.

8. The device for presenting social network search results according to claim 7, wherein the search result obtaining module is further configured to obtain the keyword through a search engine, and determine whether the keyword is a keyword corresponding to the social attribute type or not, if yes, obtain user data corresponding to the keyword through a social networking query interface.

9. The device for presenting social network search results according to claim 7, wherein the device further comprises a result searching module configured to obtain an inputted social attribute keyword, and obtain the user data corresponding to the inputted social attribute keyword in the analysis result;
the presenting module is further configured to present the user data matching the social attribute keyword.

10. The device for presenting social network search results according to claim 7, wherein the search result obtaining module is further configured to obtain user data corresponding to the keyword through multiple social networking query interfaces according to the keyword.

11. The device for presenting social network search results according to any of claims 7-10, wherein the social attribute type comprises at least one selected from the group consisting of name, region, industry, age, age bracket, birth date, gender, constellation, graduate school, graduate class, photo, network virtual community, occupation, and company.

12. The device for presenting social network search results according to claim 11, wherein the device further comprises a user screening module configured to obtain user authorization information, obtain authorized user data corresponding to the user authorization information, and screen the user data corresponding to the authorized user data on social attribute type in the search results;
the presenting module is further configured to present the user data matching the authorized user data.

13. A storage medium for storing computer executable instructions, the storage medium storing one or more programs to be executed by one or more processors for executing a method for presenting social network search results, wherein the method comprises:
obtaining a keyword, and obtaining search results according to the keyword;
obtaining a social attribute type;
obtaining information corresponding to the social attribute type in the search results according to the social attribute type, and statistically analyzing the information according to the social attribute type to obtain an analysis result; and
presenting the analysis result according to the social attribute type.

14. The storage medium according to claim 13, wherein the step of obtaining a keyword, and obtaining search results according to the keyword comprises:
obtaining the keyword through a search engine; and
determining whether the keyword is a keyword corresponding to the social attribute type or not, if yes, obtaining user data corresponding to the keyword through a social networking query interface.

15. The storage medium according to claim 13, wherein after the step of presenting the analysis result according to the social attribute type, the method further comprises:
obtaining an inputted social attribute keyword;
obtaining the user data corresponding to the inputted social attribute keyword in the analysis result; and
presenting the user data matching the social attribute keyword.

16. The storage medium according to claim 13, wherein the step of obtaining search results according to the keyword comprises:
obtaining user data corresponding to the keyword through multiple social networking query interfaces according to the keyword.

17. The storage medium according to any of claims 13-16, wherein the social attribute type comprises at least one selected from the group consisting of name, region, industry, age, age bracket, birth date, gender, constellation, graduate school, graduate class, photo, network virtual community, occupation, and company.

18. The storage medium according to claim 17, wherein prior to the step of presenting the analysis result according to the social attribute type, the method further comprises:
obtaining user authorization information;
obtaining authorized user data corresponding to the user authorization information;
screening the user data corresponding to the authorized user data on social attribute type in the search results; and
presenting the user data matching the authorized user data.
